# FASCICULE DE BREVET EUROPEEN

(11) **EP 4 193 410 B1**
(45) Date de publication et mention de la délivrance du brevet: **08.05.2024**
(21) Numéro de dépôt: 21762747.0
(22) Date de dépôt: 28.07.2021
(51) Int. Cl.: H01M 8/2483, H01M 8/249, H01M 8/04223, H01M 8/04029, H01M 8/04007

(54) **PILE À COMBUSTIBLE, SYSTÈME DE PILE À COMBUSTIBLE ET PROCÉDÉ DE CONTRÔLE DU SYSTÈME**
BRENNSTOFFZELLE, BRENNSTOFFZELLENSYSTEM UND VERFAHREN ZUM STEUERN DES SYSTEMS
FUEL CELL, FUEL CELL SYSTEM AND METHOD FOR CONTROLLING THE SYSTEM

(30) Priorité: 07.08.2020 FR 2008349
(43) Date de publication de la demande: 14.06.2023
(73) Titulaire: Safran Power Units, 31200 Toulouse (FR)
(72) Inventeur: STEPHAN, Rémi, André, Armand, 77550 MOISSY-CRAMAYEL (FR); HORDE, Théophile, 77550 MOISSY-CRAMAYEL (FR); RIOS, Loïc, Pierre, Michel, 77550 MOISSY-CRAMAYEL (FR)
(74) Mandataire: Cabinet Beau de Loménie
(86) Numéro de dépôt international: PCT/FR2021/051405
(87) Numéro de publication internationale: WO 2022/029381

(56) Documents cités:
- EP-A1- 2 037 526
- DE-A1-102015 015 635
- US-A1- 2010 266 918

## Description

### Domaine technique

Le présent exposé concerne une pile à combustible comprenant un système de chauffage de la pile à combustible, en particulier une pile à membrane échangeuse de protons.

### Technique antérieure

Les piles à combustible comprennent généralement un empilement de cellules élémentaires, aussi appelé « stack », disposé entre deux collecteurs de courant. Chaque cellule élémentaire est composée d'un assemblage membrane/électrodes, formé d'une membrane échangeuse de protons disposée entre une électrode anodique et une électrode cathodique. L'assemblage membrane/électrodes est lui-même disposé entre deux plaques distributrices, aussi appelées plaques bipolaires. Lors de l'empilement des cellules élémentaires, les plaques distributrices disposées entre deux assemblages membrane/électrodes permettent la circulation d'hydrogène sur l'une de leur face et d'air sur la face opposée.

Chaque pile à combustible a une température optimale de fonctionnement qui dépend de la nature des différents composants formant la pile. Aussi, afin de garantir un fonctionnement optimal ainsi qu'une durée de vie maximale de la pile à combustible, il est recommandé que la pile puisse être maintenue à une température voisine de cette température optimale et ce, de manière homogène dans le stack.

Or, lors de son fonctionnement, la réaction électrochimique prenant place au sein de chaque cellule élémentaire est une réaction exothermique si bien que, si l'on souhaite maintenir la température de la pile à une température voisine de la température optimale de fonctionnement, il est avantageux de refroidir la pile à combustible.

De manière connue, le dispositif de refroidissement de la pile comprend une pompe de circulation du liquide de refroidissement qui augmente l'encombrement de la pile à combustible et qui consomme de l'énergie.

Par ailleurs, pour initier la réaction électrochimique et maximiser rapidement le rendement énergétique de la pile à combustible, le stack de la pile à combustible est préchauffé à la température optimale de fonctionnement de la pile qui est généralement supérieure à la température ambiante, voire supérieure à 100°C (degré Celsius), notamment dans le cas d'une pile à combustible à membrane échangeuse de protons haute température, appelée PEMFC HT conformément au sigle en anglais pour « Proton Exchange Membrane Fuel Cell High Température ». Ce préchauffage peut être réalisé au moyen d'une résistance électrique qui est alimentée par une batterie.

On comprend donc qu'il est connu de réaliser la fonction de préchauffage au moyen d'un dispositif de chauffage et la fonction de refroidissement au moyen d'un dispositif de refroidissement, distinct du dispositif de chauffage. Ces deux dispositifs sont agencés dans la pile à combustible. Bien qu'un tel agencement permette de réguler la température de la pile à combustible, il implique notamment un accroissement de masse et d'encombrement important de la pile à combustible. En outre, le dispositif de chauffage peut nécessiter une batterie dont la masse peut avoisiner les 60 kg (kilogramme). EP 2 037 526 A1 décrit une pile à combustible comportant plusieurs sous-empilements étant séparés les uns des autres par des plaques intermédiaires qui comprennent des vannes de contrôle du fluide caloporteur et qui permettent (ou non) l'alimentation des sous-empilements en fluide caloporteur pendant une phase de préchauffage.

### Exposé de l'invention

Le présent exposé vise à remédier au moins en partie à ces inconvénients.

A cet effet, le présent exposé concerne une pile à combustible comprenant :
- un empilement d'assemblages membrane/électrode comportant un électrolyte conducteur d'ions disposé entre une anode et une cathode, deux assemblages adjacents étant séparés par une plaque bipolaire, l'empilement comportant une première et une deuxième extrémité,
- une plaque terminale d'entrée disposée à la première extrémité de l'empilement et une plaque terminale de sortie disposée à la deuxième extrémité de l'empilement,
- n plaques intermédiaires disposées dans l'empilement entre la plaque terminale d'entrée et la plaque terminale de sortie pour former n+1 sous-empilements de l'empilement, n étant supérieur ou égal à 1,
- des conduits de circulation d'un fluide caloporteur, d'un comburant et d'un combustible dans la pile à combustible, les conduits de circulation passant dans la plaque terminale d'entrée, la plaque terminale de sortie et les n plaques intermédiaires,
- des vannes de contrôle du fluide caloporteur dans les conduits de circulation de la plaque terminale de sortie et des vannes de contrôle du fluide caloporteur, du comburant et du combustible dans les conduits de circulation des n plaques intermédiaires, les vannes de contrôle étant configurées pour permettre la circulation du fluide caloporteur, du comburant et du combustible dans m sous-empilements de l'empilement, m étant supérieur ou égal à 1 et inférieur ou égal à n.

On entend par plaque terminale de la pile à combustible, une plaque permettant le serrage mécanique de l'empilement et comprenant les interfaces fluidiques de la pile à combustible.

On comprend que les circuits de circulation passent également dans les plaques bipolaires.

Grâce aux n plaques intermédiaires, il est possible de former n+1 sous-empilements, et donc de ne pas préchauffer tout l'empilement de la pile à combustible mais m sous-empilements, m étant supérieur ou égal à 1 et inférieur ou égal à n. Ensuite, lorsque les m sous-empilements sont à température de travail de la pile à combustible, il est possible de générer de l'énergie électrique dans les m sous-empilements et d'utiliser cette énergie pour préchauffer d'autres sous-empilements. Aussi, l'énergie à fournir pour préchauffer tout l'empilement est réduite en comparaison d'une pile à combustible dépourvue de plaques intermédiaires.

Il est également possible de faire fonctionner la pile à combustible en mode ralenti dans lequel les puissances fournies par la pile à combustible sont relativement basses, l'énergie fournie par les m sous-empilements étant utilisée, par exemple, pour alimenter des composants auxiliaires d'un système comprenant la pile à combustible et/ou pour charger une batterie du système et/ou pour fournir de l'énergie à un consommateur de faible puissance.

En mode ralenti, il n'est donc pas nécessaire d'arrêter l'empilement complet. Cela permet de retrouver rapidement de la puissance lorsque cela est souhaité. En effet, en mode ralenti, une partie de l'empilement est maintenu à température de travail de la pile à combustible et la pile à combustible peut fournir une puissance maximale plus rapidement que lorsque la pile à combustible a été arrêtée et donc refroidie.

Dans certains modes de réalisation, les conduits de circulation du fluide caloporteur pour le préchauffage de la pile à combustible et pour le refroidissement de la pile à combustible peuvent être confondus.

On comprend qu'il est possible d'utiliser le même fluide caloporteur pour préchauffer la pile à combustible lors de la phase de préchauffage de la pile à combustible et pour refroidir la pile à combustible lors de la phase de production d'énergie avec la pile à combustible.

On comprend qu'il n'est pas nécessaire de prévoir des conduits distincts pour la circulation du fluide caloporteur lors de la phase de préchauffage et lors de la phase de production d'énergie.

Dans certains modes de réalisation, l'électrolyte conducteur d'ion peut être une membrane échangeuse de proton.

Dans certains modes de réalisation, la membrane échangeuse de protons peut être une membrane échangeuse de protons haute température.

Dans certains modes de réalisation, les vannes de contrôle d'au moins une des n plaques intermédiaires peuvent être externes à la plaque intermédiaire.

Dans certains modes de réalisation, au moins une des vannes de contrôle peut être munie d'un clapet anti-retour.

Le présent exposé concerne également un système comprenant une pile à combustible telle que définie précédemment, un circuit de circulation du fluide caloporteur, un circuit de circulation du combustible, un circuit de circulation du comburant et un circuit électrique comprenant un dispositif de stockage d'énergie.

Dans certains modes de réalisation, le dispositif de stockage d'énergie peut comprendre une batterie, un supercondensateur, ou tout autre dispositif permettant de stocker de l'énergie.

Dans certains modes de réalisation, le circuit de circulation du fluide caloporteur peut comprendre un échangeur de chaleur configuré pour refroidir le fluide caloporteur et un échangeur de chaleur configuré pour réchauffer le fluide caloporteur.

Le présent exposé concerne également un procédé de contrôle d'un système tel que défini précédemment, le procédé comprenant les étapes suivantes :
- une étape de préchauffage de m sous-empilements de l'empilement de la pile à combustible ;
- lorsque les m sous-empilements sont à température de travail, une étape de production d'énergie dans les m sous-empilements.

Dans certains modes de réalisation, le procédé peut comprendre :
- une étape de préchauffage de p sous-empilements de l'empilement de la pile à combustible au moins partiellement au moyen de l'énergie et/ou de la chaleur produite par les m sous-empilements, les p sous-empilement étant distincts des m sous-empilements et p étant supérieur ou égal à 1 et m+p étant inférieur ou égal à n+1,
- lorsque les p sous-empilements sont à température de travail, une étape de production d'énergie dans les m+p sous-empilements.

Dans certains modes de réalisation, l'énergie produite par les m sous-empilements peut être stockée dans le dispositif de stockage d'énergie et/ou être utilisée pour alimenter des composants auxiliaires du système et/ou être utilisée pour alimenter des composants extérieurs au système (600).

### Brève description des dessins

D'autres caractéristiques et avantages de l'objet du présent exposé ressortiront de la description suivante de modes de réalisation, donnés à titre d'exemples non limitatifs, en référence aux figures annexées.
[Fig. 1] La figure 1 est une vue schématique d'une pluralité d'assemblages membrane/électrode, deux assemblages adjacents étant séparés par une plaque bipolaire.
[Fig. 2] La figure 2 est une vue schématique d'une pile à combustible de l'état de la technique.
[Fig. 3] La figure 3 est une vue schématique d'une pile à combustible selon le présent exposé.
[Fig. 4] La figure 4 est une vue schématique d'une autre pile à combustible selon le présent exposé.
[Fig. 5] La figure 5 est une vue schématique d'un exemple de système selon le présent exposé.
[Fig. 6] La figure 6 est une vue schématique d'exemples la circulation du fluide caloporteur dans la pile à combustible de la figure 3.
[Fig. 7] La figure 7 est une vue schématique d'exemples la circulation du combustible dans la pile à combustible de la figure 3.
[Fig. 8] La figure 8 est une vue schématique d'exemples la circulation du comburant dans la pile à combustible de la figure 3.
[Fig. 9] La figure 9 est un ordinogramme représentant les étapes d'un procédé de contrôle du système de la figure 5.

Sur l'ensemble des figures, les éléments en commun sont repérés par des références numériques identiques.

### Description détaillée

Dans ce qui suit, les éléments communs aux différents modes de réalisation sont identifiés par les mêmes références numériques.

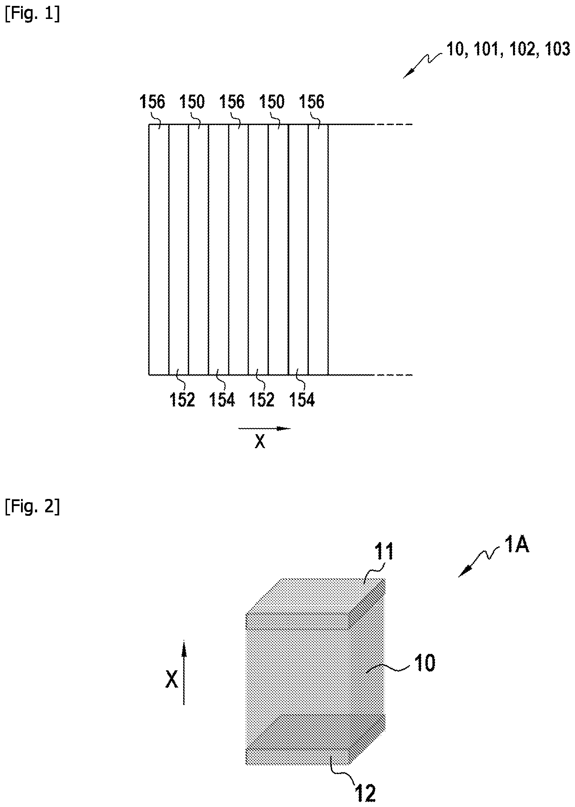

La figure 1 est une vue schématique d'une pluralité d'assemblages 150-154 membrane/électrode, deux assemblages 150-154 adjacents étant séparés par une plaque bipolaire 156. Chaque assemblage 150-154 comprend un électrolyte conducteur d'ions 150 disposé entre une anode 152 et une cathode 154. La flèche X représente le sens de circulation des fluides dans l'empilement 10.

A titre d'exemple non-limitatif, l'électrolyte conducteur d'ions 150 peut être une membrane échangeuse de proton, par exemple une membrane échangeuse de proton à haute température.

La figure 2 représente une vue schématique d'une pile à combustible 1A de l'état de la technique.

La pile à combustible 1A de la figure 2 comprend un empilement d'assemblages membrane/électrode 10 et une première et une deuxième extrémité. La pile à combustible 1A de la figure 2 comprend une plaque terminale d'entrée 12 disposée à la première extrémité de l'empilement 10 et une plaque terminale de sortie 11 disposée à la deuxième extrémité de l'empilement 10. La flèche X représente le sens de circulation des fluides dans la pile à combustible 1A.

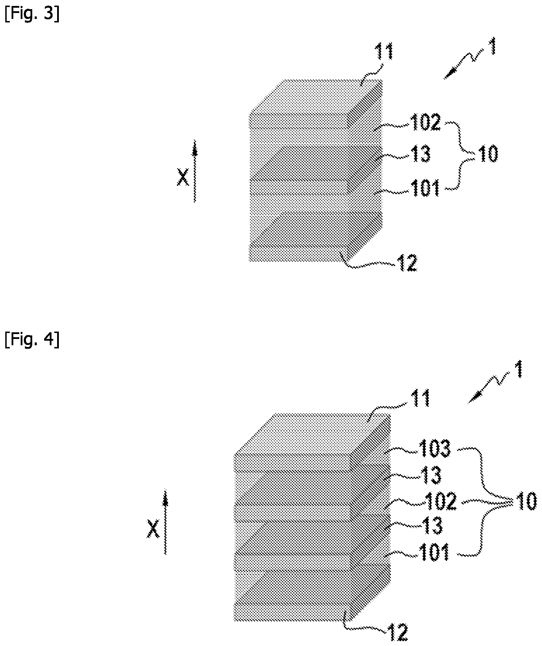

Les figures 3 et 4 sont des vues schématiques d'une pile à combustible 1 selon le présent exposé.

La pile à combustible 1 des figures 3 et 4 comprend un empilement d'assemblages membrane/électrode 10 et une première et une deuxième extrémité. La pile à combustible 1 de la figure 3 comprend une plaque terminale d'entrée 12 disposée à la première extrémité de l'empilement 10 et une plaque terminale de sortie 11 disposée à la deuxième extrémité de l'empilement 10. L'empilement 10 est défini entre la plaque terminale d'entrée 12 et la plaque terminale de sortie 11. La flèche X représente le sens de circulation des fluides dans la pile à combustible 1.

Dans le mode de réalisation de la figure 3, la pile à combustible 1 comprend une plaque intermédiaire 13, n étant égal à 1. La plaque intermédiaire 13 est disposée dans l'empilement 10 entre la plaque terminale d'entrée 12 et la plaque terminale de sortie 11 pour former deux sous-empilements 101, 102 (n+1).

Dans le mode de réalisation de la figure 4, la pile à combustible 1 comprend deux plaques intermédiaires 13, n étant égal à 2. Les deux plaques intermédiaires 13 sont disposées dans l'empilement 10 entre la plaque terminale d'entrée 12 et la plaque terminale de sortie 11 pour former trois sous-empilements 101, 102, 103 (n+1).

On comprend que le présent exposé n'est pas limité à un empilement 10 comprenant une ou deux plaques intermédiaires 13. L'empilement peut comprendre n plaques intermédiaires 13 qui forment n+1 sous-empilements de l'empilement 10.

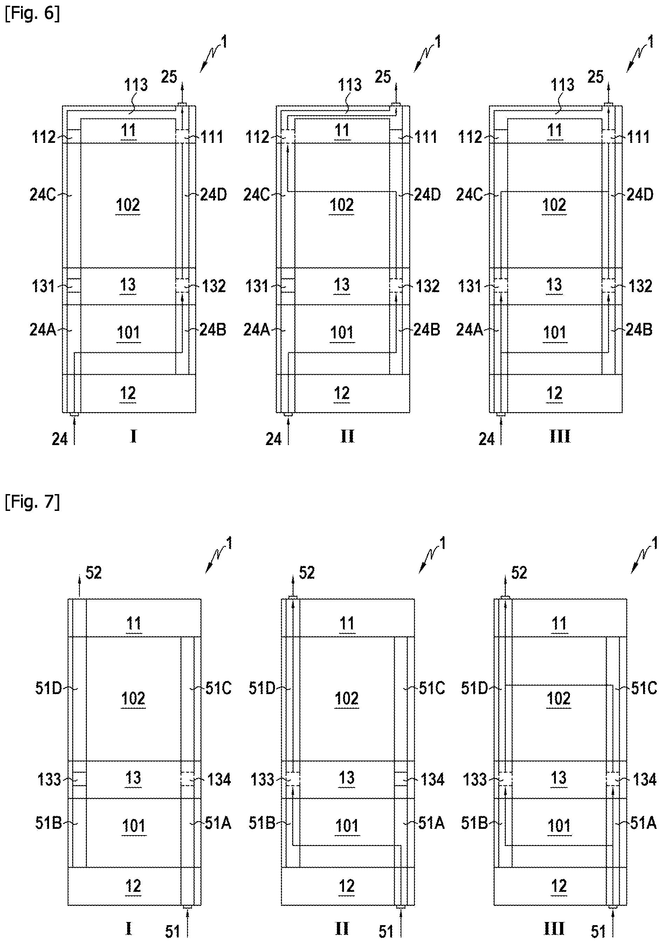

Les figures 6-8 sont respectivement des vues schématiques de la circulation d'un fluide caloporteur, d'un combustible et d'un comburant dans la pile à combustible 1 de la figure 3.

La figure 6 est une vue schématique des conduits de circulation du fluide caloporteur 24A-24D, 113 qui passent dans la plaque terminale d'entrée 12, la place terminale de sortie 11 et la plaque intermédiaire 13. La pile à combustible 1 comprend des vannes de contrôle du fluide caloporteur 111, 112 dans les conduits de la plaque terminale de sortie 11 et des vannes de contrôle du fluide caloporteur 131, 132 dans les conduits de circulation de la plaque intermédiaire 13. Le conduit 113 est dans la plaque terminale de sortie 11 permettant de relier les vannes de contrôle 111 et 112. La vanne de contrôle 131 est disposée entre le conduits 24A du premier sous-empilement 101 et le conduit 24C du deuxième sous-empilement 102. La vanne de contrôle 132 est disposée entre le conduit 24B du premier sous-empilement 101 et le conduit 24D du deuxième sous-empilement 102. La vanne de contrôle 112 est disposée entre le conduit 24C du deuxième sous-empilement 102 et le conduit 113 de la plaque terminale de sortie 11. La vanne de contrôle 111 est disposée entre le conduit 24D du deuxième sous-empilement 102 et le conduit 113 de la plaque terminale de sortie 11.

Dans le mode de réalisation de la figure 6, les conduits de circulation du fluide caloporteur 24A-24D, 113 permettent de chauffer et de refroidir la pile à combustible 1. Les conduits de circulation du fluide caloporteur pour préchauffer la pile à combustible 1 sont confondus avec les conduits de circulation du fluide caloporteur pour refroidir la pile à combustible 1.

On comprend que la pile à combustible 1 peut comprendre des conduits distincts pour la circulation du fluide caloporteur de préchauffage et pour la circulation du fluide caloporteur de refroidissement de la pile à combustible 1.

La figure 7 est une vue schématique des conduits de circulation du combustible 51A-51D qui passent dans la plaque terminale d'entrée 12, la place terminale de sortie 11 et la plaque intermédiaire 13. La pile à combustible 1 comprend des vannes de contrôle du combustible 133, 134 dans les conduits de circulation de la plaque intermédiaire 13. La vanne de contrôle 133 est disposée entre le conduit 51B du premier sous-empilement 101 et le conduit 51D du deuxième sous-empilement 102. La vanne de contrôle 134 est disposée entre le conduit 51A du premier sous-empilement 101 et le conduit 51C du deuxième sous-empilement 102.

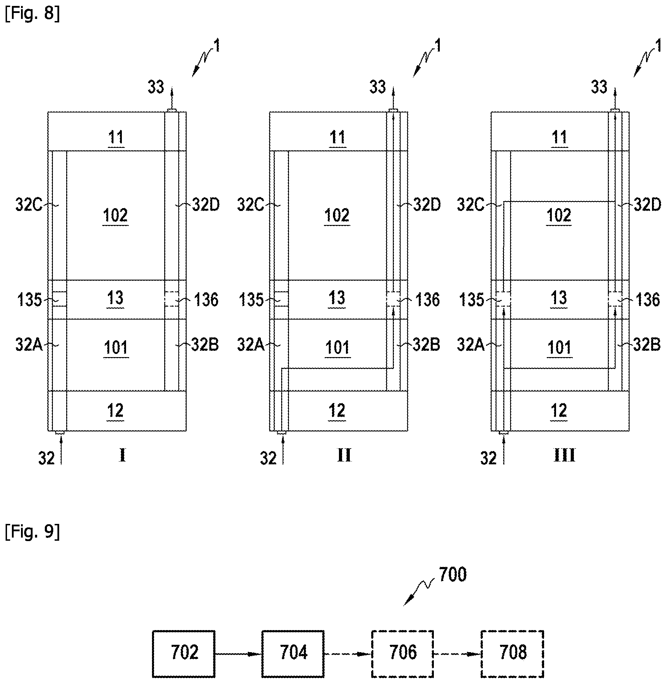

La figure 8 est une vue schématique des conduits de circulation du comburant 32A-32D qui passent dans la plaque terminale d'entrée 12, la plaque terminale de sortie 11 et la plaque intermédiaire 13. La pile à combustible 1 comprend des vannes de contrôle du comburant 135, 136 dans les conduits de circulation de la plaque intermédiaire 13. La vanne de contrôle 135 est disposée entre le conduit 32A du premier sous-empilement 101 et le conduit 32C du deuxième sous-empilement 102. La vanne de contrôle 136 est disposée entre le conduit 32B du premier sous-empilement 101 et le conduit 32D du deuxième sous-empilement 102.

Dans le mode de réalisation des figures 6-8, les vannes de contrôle du fluide caloporteur 111, 112, 131, 132, du combustible 133, 134 et du comburant 135, 136 sont configurées pour permettre la circulation du fluide caloporteur, du comburant et du combustible dans m sous-empilements 101, 102, m étant supérieur ou égal à 1 et inférieur ou égal à n.

Dans le mode de réalisation des figures 6-8, m peut être égal à 1 ou à 2, c'est-à-dire que les vannes de contrôle sont configurées pour permettre la circulation du fluide caloporteur, du comburant et du combustible dans un seul sous-empilement 101 ou dans les deux sous-empilements 101, 102.

A titre d'exemple non limitatif, le fluide caloporteur peut être de l'huile ou de l'eau.

A titre d'exemple non limitatif, le comburant peut être de l'air ou de l'oxygène pur.

Dans le mode de réalisation des figures 6-8, les vannes de contrôle sont comprises dans la plaque intermédiaire 13.

On comprend que certaines vannes de contrôle pourraient ne pas être comprises dans la plaque intermédiaire 13, c'est-à-dire que certaines vannes de contrôle pourraient être externes à la plaque intermédiaire 13.

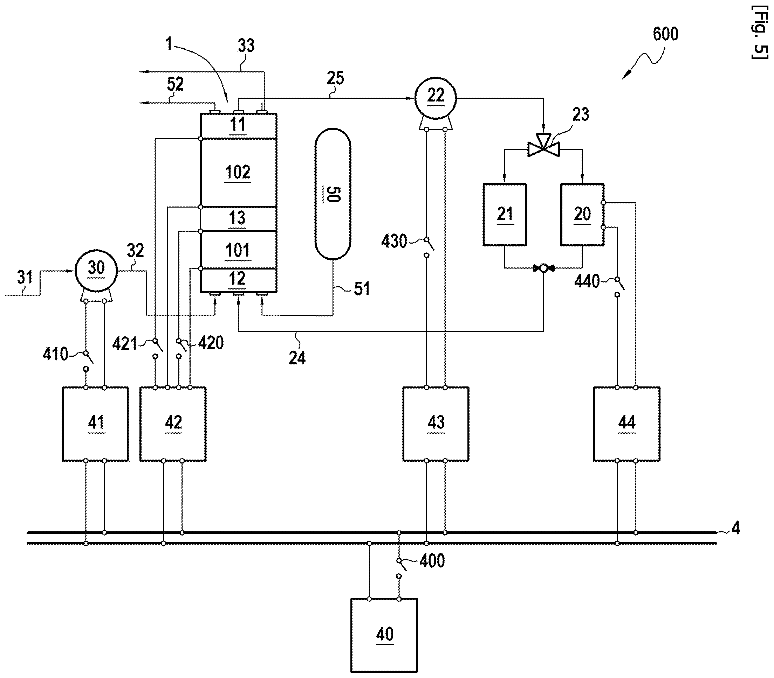

La figure 5 représente un système 600 comprenant une pile à combustible 1, à titre d'exemple non-limitatif, la pile à combustible 1 des figures 3, 6-8. On comprend que le système 600 pourrait comprendre une pile à combustible comportant plus d'une plaque intermédiaire 13.

Dans le mode de réalisation de la figure 5, le système 600 comprend un circuit de circulation du fluide caloporteur 20-25, un circuit de circulation du comburant 30-33 et un circuit de circulation du combustible 50-52.

Dans le mode de réalisation de la figure 5, le système 600 comprend un échangeur de chaleur 20 configuré pour réchauffer le fluide caloporteur, à titre d'exemple non limitatif un réchauffeur électrique, et un échangeur de chaleur 21 configuré pour refroidir le fluide caloporteur. L'échangeur de chaleur 20 configuré pour réchauffer le fluide caloporteur et l'échangeur de chaleur 21 configuré pour refroidir le fluide caloporteur font partie du circuit de circulation du fluide caloporteur 20-25.

Dans le mode de réalisation de la figure 5, le circuit de circulation du fluide caloporteur 20-25 comprend un conduit d'entrée 24 du fluide caloporteur dans la pile à combustible 1 et un conduit de sortie 25 du fluide caloporteur hors de la pile à combustible 1, une pompe 22 pour la circulation du fluide caloporteur et une vanne 23 à trois voies permettant d'orienter le fluide caloporteur provenant de la pile à combustible 1 soit vers l'échangeur de chaleur 20 configuré pour réchauffer le fluide caloporteur, soit vers l'échangeur de chaleur 21 configuré pour refroidir le fluide caloporteur. Le conduit d'entrée 24 du fluide caloporteur est relié à la plaque terminale d'entrée 12 de la pile à combustible 1 et le conduit de sortie 25 du fluide caloporteur est relié à la plaque terminale de sortie 11 de la pile à combustible 1.

Dans le mode de réalisation de la figure 5, la pompe 22 et la vanne 23 sont disposées dans le conduit de sortie 25 du fluide caloporteur, entre la pile à combustible 1 et les échangeurs de chaleur 20, 21.

En fonctionnement de la pile à combustible 1, le fluide caloporteur circule en boucle dans le circuit de circulation du fluide caloporteur 20-25. Par exemple, le fluide caloporteur circule dans la pile à combustible 1, c'est-à-dire dans les conduits de circulation du fluide caloporteur 24A-24D, 113, sort de la pile à combustible, circule dans le conduit de sortie 25 du fluide caloporteur, passe dans la pompe 22. A la sortie de la pompe 22, en fonction des voies ouvertes dans la vanne 23, le fluide caloporteur circule dans l'échangeur de chaleur 20 configuré pour réchauffer le fluide caloporteur ou dans l'échangeur de chaleur 21 configuré pour refroidir le fluide caloporteur. À la sortie de l'échangeur de chaleur 20 ou 21, le fluide caloporteur circule dans le conduit d'entrée 24 du fluide caloporteur et entre dans la pile à combustible 1.

Dans le mode de réalisation de la figure 5, le circuit de circulation du combustible 50-52 comprend un réservoir d'hydrogène 50, un conduit d'entrée 51 de l'hydrogène dans la pile à combustible 1 et un conduit de sortie 52 de l'hydrogène non consommé hors de la pile à combustible 1. On comprend que le réservoir d'hydrogène 50 peut être remplacé par une source de gaz combustible contenant de l'hydrogène qui puisse alimenter la pile à combustible 1. Le conduit d'entrée 51 de l'hydrogène est relié à la plaque terminale d'entrée 12 de la pile à combustible 1 et le conduit de sortie 52 de l'hydrogène non consommé est relié à la plaque terminale de sortie 11 de la pile à combustible 1.

L'hydrogène peut être stocké dans le réservoir d'hydrogène 50 sous forme liquide (cryogénique) ou gazeux sous haute pression.

A titre d'exemple non-limitatif, le réservoir d'hydrogène 50 est relié à la pile à combustible 1, le cas échéant, par l'intermédiaire d'un ou plusieurs dispositifs permettant de vaporiser l'hydrogène et d'abaisser sa pression (détendeurs) à une valeur adéquate pour la pile à combustible 1, par exemple quelques bars, typiquement 1 à 2 bars absolus.

Il y a principalement 2 modes d'alimentation de la pile en hydrogène gazeux : « circulant » ou « dead-end ».

En mode « circulant », une vanne de régulation de débit est disposée en amont de la pile à combustible 1 de façon à fournir à la pile à combustible 1 le débit d'hydrogène nécessaire fonction de la production électrique de la pile à combustible 1. Le débit est fourni avec un certain surplus et la part d'hydrogène non consommé est évacué par le conduit de sortie 52.

En mode « dead end », une vanne est disposée sur le conduit de sortie 52. Cette vanne est fermée la plus grande partie du temps. La pile à combustible 1 est alimentée directement avec de l'hydrogène à la bonne pression, sans dispositif de régulation de débit. Seul l'hydrogène nécessaire à la pile à combustible 1 est consommé dans la pile, ce qui a tendance à faire diminuer la pression d'hydrogène dans la pile à combustible 1. Le dispositif d'alimentation maintient la pression d'hydrogène désirée dans la pile combustible 1 et permet donc d'alimenter en hydrogène la pile combustible 1. Il y a autant d'hydrogène fourni à la pile à combustible 1 que d'hydrogène consommé par la pile à combustible 1.

Il existe toutefois des phénomènes parasites au sein de la pile (« cross-over ») : migration de l'azote et de l'eau produits à la cathode. Ces espèces peuvent traverser les membranes et se retrouver à l'anode. Pour les évacuer, on ouvre de temps en temps la vanne située sur le conduit de sortie 52. Le débit d'hydrogène permet alors d'évacuer l'azote et l'eau indésirables. On comprend qu'alors une certaine quantité d'hydrogène est perdue dans cette opération. Toutefois, la quantité d'hydrogène perdue dans ce mode d'alimentation reste bien inférieure aux pertes d'hydrogène en mode circulant.

Un troisième mode est dérivé du mode « circulant » et permet de réinjecter à l'entrée de la pile à combustible 1 l'hydrogène qui en sort et donc de réutiliser la plus grande partie de l'hydrogène qui est sinon perdu. Ce procédé est appelé « recirculation ».

En fonctionnement de la pile à combustible 1, le combustible stocké dans le réservoir d'hydrogène 50 circule dans le conduit d'entrée 51 de l'hydrogène dans la pile à combustible 1, entre dans la pile à combustible 1, circule dans la pile à combustible 1, notamment dans les conduits de circulation du combustible 51A-51D, sort de la pile à combustible 1 et circule dans le conduit de sortie 52 de l'hydrogène non consommé.

Dans le mode de réalisation de la figure 5, le circuit de circulation du comburant 30-33 comprend un compresseur d'air 30, un conduit d'admission d'air 31 dans le compresseur d'air 30, un conduit d'entrée 32 reliant le compresseur d'air 30 et la pile à combustible 1 et un conduit de sortie 33 de la pile à combustible 1. Le conduit d'entrée 32 est relié à la plaque terminale d'entrée 12 de la pile à combustible 1, le conduit de sortie 33 est relié à la plaque terminale de sortie 11 de la pile à combustible 1 et le compresseur d'air est disposé 30 entre le conduit d'admission d'air 30 dans le compresseur d'air 31 et le conduit d'entrée 32.

En fonctionnement de la pile à combustible 1, le comburant circule dans conduit d'admission d'air 31 dans le compresseur d'air 30, passe dans le compresseur d'air 30, circule dans le conduit d'entrée 32 reliant le compresseur d'air 30 et la pile à combustible 1, entre dans la pile à combustible 1, circule dans la pile à combustible 1, notamment dans les conduits de circulation du comburant 32A-32D, sort de la pile à combustible 1 et circule dans le conduit de sortie 33.

Dans le mode de réalisation de la figure 5, le système 600 comprend un circuit électrique comprenant une batterie 40. Le circuit électrique peut comprendre un bus électrique 4, reliant la batterie 40 à des convertisseurs électriques, par exemple un convertisseur électrique 41 pour le compresseur d'air 30, un convertisseur électrique 42 pour la pile à combustible 1, un convertisseur électrique 43 pour la pompe 22 et un convertisseur électrique 44 pour l'échangeur de chaleur 20 configuré pour réchauffer le fluide caloporteur. Le circuit électrique comprend des contacteurs électriques (ou interrupteurs) 400-440 configurés pour permettre de relier ou d'isoler bus électrique 4 du compresseur d'air 30, de la pile à combustible 1, de la pompe 22, de l'échangeur de chaleur 20 configuré pour réchauffer le fluide caloporteur et/ou de la batterie 40.

On comprend que les convertisseurs électriques et les contacteurs électriques sont optionnels. Le cas échéant, ils peuvent être distincts les uns des autres ou communs. Le convertisseur 44 notamment n'est qu'un exemple de réalisation qui suppose que la chauffe soit faite de manière électrique ; la chauffe peut être envisagée par d'autres modes.

Le procédé de contrôle 700 du système 600 va être décrit ci-après.

Le procédé de contrôle 700 comprend une étape de préchauffage 702 de m sous-empilements 101, 102, 103 de l'empilement 10 de la pile à combustible 1, m étant supérieur ou égal à 1 et inférieur ou égal à n, n étant le nombre de plaques intermédiaires 13 de la pile à combustible 1, n étant supérieur ou égal à 1.

Lorsque les m sous-empilements 101, 102, 103 sont à température de travail, une étape de production d'énergie 704 dans les m sous-empilements 101, 102, 103.

Le procédé de contrôle 700 peut comprendre une étape de préchauffage 706 de p sous-empilements 101, 102, 103 de l'empilement 10 de la pile à combustible 1 au moins partiellement au moyen de l'énergie produite par les m sous-empilements 101, 102, 103, les p sous-empilements étant distincts des m sous-empilements et p étant supérieur ou égal à 1 et m+p étant inférieur ou égal à n+1. Lorsque les p sous-empilements sont à température de travail, le procédé de contrôle 700 peut comprendre une étape de production d'énergie 708 dans les m+p sous-empilements.

Dans le procédé de contrôle 700, l'énergie produite par les m sous-empilements peut être stockée dans la batterie 40, qui fait office de dispositif de stockage d'énergie et/ou être utilisée pour alimenter des composants auxiliaires du système 600 et/ou être utilisée pour fournir de l'énergie aux composants externes reliés au système 600 et alimentés par le système 600.

Le procédé de contrôle 700 du système 600 va être décrit en référence aux figures 5-9, c'est-à-dire dans un mode de réalisation dans lequel n est égal à 1, c'est-à-dire dans lequel la pile à combustible 1 comprend une seule plaque intermédiaire 13 et deux sous-empilements 101, 102 de l'empilement 10.

Le procédé de contrôle 700 comprend une étape de préchauffage 702 de la pile à combustible 1, c'est-à-dire du sous-empilement 101 dans le mode de réalisation des figures 6-8. L'étape de préchauffage 702 de la pile à combustible 1 correspond à la phase I des figures 6-8.

Dans les figures 6-8, les vannes de contrôles sont représentées en trait plein lorsqu'elles sont fermées, c'est-à-dire qu'elles ne laissent pas passer de fluide et en trait discontinus lorsqu'elles sont ouvertes, c'est-à-dire qu'elles laissent passer un fluide.

Lors de l'étape de préchauffage 702, le contacteur 400 disposé entre le bus électrique 4 et la batterie 40, le contacteur 430 disposé entre le convertisseur électrique 43 et la pompe 22 et le contacteur 440 disposé entre le convertisseur électrique 44 et l'échangeur de chaleur 20 configuré pour réchauffer le fluide caloporteur sont fermés. La vanne 23 à trois voie est dans une position telle que le fluide caloporteur parcourt l'échangeur de chaleur 20 configuré pour réchauffer le fluide caloporteur.

La pompe 22 entraine le fluide caloporteur dans le circuit de circulation du fluide caloporteur 20-25. Le fluide caloporteur entre dans l'échangeur de chaleur 20 qui réchauffe le fluide caloporteur. Le fluide caloporteur réchauffé circule dans le conduit d'entrée 24 du fluide caloporteur dans la pile à combustible 1. Le fluide caloporteur entre dans la pile à combustible 1 par la plaque terminale d'entrée 12, pénètre dans le conduit 24A du premier sous-empilement 101.

La vanne de contrôle 131 de la plaque intermédiaire 13 est fermée et la vanne de contrôle 132 de la plaque intermédiaire 13 est ouverte de sorte que le fluide caloporteur ne peut pas s'écouler dans le conduit 24C du deuxième sous-empilement 102 et le fluide caloporteur circule dans le premier sous-empilement 101, c'est-à-dire que le fluide caloporteur traverse le premier sous-empilement 101.

La vanne de contrôle 112 de la plaque terminale de sortie 11 est fermée et la vanne de contrôle 111 de la plaque terminale de sortie est ouverte de sorte que le fluide caloporteur ne circule pas dans le deuxième sous-empilement 102, c'est-à-dire qu'il ne traverse pas le deuxième sous-empilement 102. Le fluide calorifique sort ensuite de la pile à combustible 1 et circule dans le conduit de sortie 25 du fluide caloporteur pour repartir vers la pompe 22 et l'échangeur de chaleur 20.

On comprend que le fluide caloporteur ne traverse pas le deuxième sous-empilement 102 de sorte que le chauffage est principalement réalisé dans le premier sous-empilement 101.

Lors de l'étape de préchauffage 702, aucun réactif (comburant et/ou combustible) ne circule dans la pile à combustible 1.

Lorsque le premier sous-empilement 101 de la pile à combustible 1 est à température de travail de la pile à combustible 1, l'étape de production d'énergie 704 dans le premier sous-empilement 101 peut débuter.

Lors de l'étape de production d'énergie 704 dans le premier sous-empilement 101, le contacteur 410 disposé entre le convertisseur électrique 41 et le compresseur d'air 30 est fermé de sorte que le compresseur d'air 30 alimente la pile à combustible 1 en comburant.

Le comburant circule dans le conduit d'admission d'air 31 dans le compresseur d'air 30, passe dans le compresseur d'air 30, circule dans le conduit d'entrée 32 reliant le compresseur d'air 30 et la pile à combustible 1, entre dans la pile à combustible 1, circule dans le premier sous-empilement 101 de pile à combustible 1, sort de la pile à combustible 1 et circule dans le conduit de sortie 33.

Le comburant circule dans la pile à combustible 1 de la manière suivante. La vanne de contrôle 135 de la plaque intermédiaire 13 est fermée et la vanne de contrôle 136 de la plaque intermédiaire est ouverte de sorte que le comburant qui a pénétré dans le conduit 32A du premier sous-empilement 101 ne peut pas s'écouler dans le conduit 32C du deuxième sous-empilement 102 et le comburant circule dans le premier sous-empilement 101, c'est-à-dire que le comburant traverse le premier sous-empilement 101 pour passer par la vanne de contrôle 136 et pénétrer dans le conduit 32D du deuxième sous-empilement 102 et sortir de la pile à combustible 1 dans le conduit de sortie 33, comme illustré à la phase II de la figure 8.

Le combustible circule dans le conduit d'entrée 51 de l'hydrogène dans la pile à combustible 1, entre dans la pile à combustible 1, circule dans le premier sous-empilement 101 de pile à combustible 1, sort de la pile à combustible 1 et circule dans le conduit de sortie 52 de l'hydrogène non consommé.

Le combustible circule dans la pile à combustible 1 de la manière suivante. La vanne de contrôle 133 de la plaque intermédiaire 13 est fermée et la vanne de contrôle 134 de la plaque intermédiaire 13 est ouverte de sorte que le comburant qui a pénétré dans le conduit 51A du premier sous-empilement 101 ne peut pas s'écouler dans le conduit 51C du deuxième sous-empilement 102 et le combustible circule dans le premier sous-empilement 101, c'est-à-dire que le combustible traverse le premier sous-empilement 101 pour passer par la vanne de contrôle 134 et pénétrer dans le conduit 51D du deuxième sous-empilement 102 et sortir de la pile à combustible 1 dans le conduit de sortie 52 de l'hydrogène non consommé, comme illustré à la phase II de la figure 7.

Le contacteur 420 du convertisseur électrique 42 pour la pile à combustible 1 disposé entre le premier empilement 101 de la pile à combustible et le convertisseur électrique 42 est fermé de sorte que le premier empilement 101 de la pile à combustible 1 est relié au bus électrique 4.

Le premier sous-empilement 101 produit de l'énergie. L'étape de production d'énergie dans le premier sous-empilement 101 correspond à la phase I de la figure 6 et à la phase II des figures 7-8.

Lorsque la production d'énergie dans le premier sous-empilement 101 est supérieure à la consommation des auxiliaires, tels que le compresseur d'air 30, la pompe 22 et les échangeurs de chaleur 20, 21, le contacteur 400 peut rester fermer afin de recharger la batterie 40 ou le contacteur 400 peut passer en position ouverte lorsque la batterie 40 est rechargée. Lorsque le contacteur 400 est ouvert, le premier sous-empilement 101 alimente les auxiliaires. Le premier sous-empilement 101 peut également fournir de l'énergie aux équipements extérieurs aux systèmes reliés au bus électrique 4.

Lorsque la production d'énergie dans le premier sous-empilement 101 est inférieure à la consommation des auxiliaires, tels que le compresseur d'air 30, la pompe 22 et les échangeurs de chaleur 20, 21, le contacteur 400 peut rester fermer afin que la batterie 40 puisse compenser l'appel de puissance des auxiliaires.

Lorsque la production d'énergie dans le premier sous-empilement 101 est en cours, la température dans le premier sous-empilement 101 peut augmenter et lorsqu'un seuil prédéterminé est détecté, la vanne 23 à trois voies oriente le fluide caloporteur provenant de la pile à combustible 1 vers l'échangeur de chaleur 21 configuré pour refroidir le fluide caloporteur. En mode de refroidissement de la pile à combustible 1, le contacteur 440 disposé entre le convertisseur électrique 44 et l'échangeur de chaleur 20 configuré pour réchauffer le fluide caloporteur est ouvert.

Lorsque la production d'énergie dans le premier sous-empilement 101 n'est pas suffisante pour répondre aux besoins, le procédé de contrôle 400 peut comprendre une étape de préchauffage 706 du deuxième sous-empilement 102 de l'empilement 10 de la pile à combustible 1.

Lors de l'étape de préchauffage 706, le premier sous-empilement 101 produit de l'énergie et de la chaleur, comme décrit précédemment et au moins une partie de l'énergie et/ou de la chaleur produite par le premier sous-empilement 101 est utilisée pour préchauffer le deuxième sous-empilement 102. Par exemple, l'énergie produite par le premier sous-empilement 101 permet d'alimenter le compresseur 30, la pompe 22 et l'échangeur de chaleur 20 configuré pour réchauffer le fluide caloporteur. La chaleur produite par le premier sous-empilement 101 est transférée au deuxième sous-empilement 102 par l'intermédiaire du fluide caloporteur qui circule d'abord dans le premier sous-empilement 101 puis dans le deuxième sous-empilement 102.

Pour préchauffer le deuxième empilement 102, comme représenté sur la phase II de la figure 6, la vanne de contrôle 112 de la plaque terminale de sortie 11 est ouverte et la vanne de contrôle 111 de la plaque terminale de sortie est fermée de sorte que le fluide caloporteur circule dans le premier sous-empilement 101 et ensuite dans le deuxième sous-empilement 102, c'est-à-dire que le fluide caloporteur traverse le premier sous-empilement 101 puis le deuxième sous-empilement 102 pour ressortir par la vanne de contrôle 112 et parcourir le conduit 113 pour sortir de la pile à combustible dans le conduit de sortie 25 du fluide caloporteur pour repartir vers la pompe 22 et l'échangeur de chaleur 20.

On comprend que l'étape de préchauffage 706 des p sous-empilements est réalisée alors que l'étape de production d'énergie 704 dans les m sous-empilement est en cours. On comprend que l'étape de production d'énergie 704 dans les m sous-empilement peut être réalisée sans que l'étape de préchauffage 706 des p sous-empilements soit réalisée (mode ralenti).

Lorsque le deuxième sous-empilement 102 est à température de travail, le procédé de contrôle 700 peut comprendre une étape de production d'énergie 708 dans les deux sous-empilements 101, 102.

Lorsque le premier sous-empilement 101 et le deuxième sous-empilement 102 de la pile à combustible 1 sont à température de travail de la pile à combustible 1, l'étape de production d'énergie 708 dans le premier sous-empilement 101 et dans le deuxième sous-empilement 102 peut débuter.

En mode de refroidissement de la pile à combustible 1, le contacteur 430 disposé entre la pompe 22 et le bus électrique 4 est fermé et le contacteur 440 disposé entre le convertisseur électrique 44 et l'échangeur de chaleur 20 configuré pour réchauffer le fluide caloporteur est ouvert. La vanne 23 à trois voies oriente le fluide caloporteur provenant de la pile à combustible 1 vers l'échangeur de chaleur 21 configuré pour refroidir le fluide caloporteur. La vanne de contrôle 111 de la plaque terminale de sortie 11 est ouverte, la vanne de contrôle 112 de la plaque terminale de sortie 11 est fermée, la vanne de contrôle 131 de la plaque intermédiaire 13 est ouverte et la vanne de contrôle 132 de la plaque intermédiaire 13 est ouverte de sorte que le fluide caloporteur circule dans le premier sous-empilement 101 et dans le deuxième sous-empilement 102, c'est-à-dire que le fluide caloporteur traverse le premier sous-empilement 101 et le deuxième sous-empilement 102 en parallèle (et non plus en série comme dans l'étape de préchauffage du deuxième sous-empilement 102) pour ressortir par la vanne de contrôle 111 et sortir de la pile à combustible dans le conduit de sortie 25 du fluide caloporteur pour repartir vers la pompe 22 et l'échangeur de chaleur 20. Le fluide caloporteur traverse le premier sous-empilement 101 du conduit 24A vers le conduit 24B et le deuxième sous-empilement 102 du conduit 24C vers le conduit 24D, comme illustré à la phase III de la figure 6.

Lors de l'étape de production d'énergie 708 dans le premier sous-empilement 101 et le deuxième sous-empilement 102, le contacteur 410 disposé entre le convertisseur électrique 41 et le compresseur d'air 30 est fermé de sorte que le compresseur d'air 30 alimente la pile à combustible 1 en comburant.

Le comburant circule dans le conduit d'admission d'air 31 dans le compresseur d'air 30, passe dans le compresseur d'air 30, circule dans le conduit d'entrée 32 reliant le compresseur d'air 30 et la pile à combustible 1, entre dans la pile à combustible 1, circule dans le premier sous-empilement 101 et le deuxième sous-empilement 102 de la pile à combustible 1, sort de la pile à combustible 1 et circule dans le conduit de sortie 33.

Le comburant circule dans la pile à combustible 1 de la manière suivante. La vanne de contrôle 135 de la plaque intermédiaire 13 est ouverte et la vanne de contrôle 136 de la plaque intermédiaire est ouverte de sorte que le comburant qui a pénétré dans le conduit 32A du premier sous-empilement 101 s'écoule dans le conduit 32C du deuxième sous-empilement 102 et le comburant circule dans le premier sous-empilement 101 et dans le deuxième sous-empilement 102, c'est-à-dire que le comburant traverse le premier sous-empilement 101 en passant du conduit 32A au conduit 32B du premier sous-empilement 101 et traverse le deuxième sous-empilement 102 en passant du conduit 32C au conduit 32D pour sortir de la pile à combustible 1 dans le conduit de sortie 33, comme illustré à la phase III de la figure 8..

Le combustible circule dans le conduit d'entrée 51 de l'hydrogène dans la pile à combustible 1, entre dans la pile à combustible 1, circule dans le premier sous-empilement 101 et dans le deuxième sous-empilement 102 de la pile à combustible 1, sort de la pile à combustible 1 et circule dans le conduit de sortie 52 de l'hydrogène non consommé.

Le combustible circule dans la pile à combustible 1 de la manière suivante. La vanne de contrôle 133 de la plaque intermédiaire 13 est ouverte et la vanne de contrôle 134 de la plaque intermédiaire est ouverte de sorte que le combustible qui a pénétré dans le conduit 51A du premier sous-empilement 101 s'écoule dans le conduit 51C du deuxième sous-empilement 102 et le combustible circule dans le premier sous-empilement 101 et dans le deuxième sous-empilement 102, c'est-à-dire que le combustible traverse le premier sous-empilement 101 en passant du conduit 51A au conduit 51B du premier sous-empilement 101 et traverse le deuxième sous-empilement 102 en passant du conduit 51C au conduit 51D pour sortir de la pile à combustible 1 dans le conduit de sortie 52 de l'hydrogène non consommé, comme illustré à la phase III de la figure 7.

Les contacteurs 420, 421 du convertisseur électrique 42 pour la pile à combustible 1 disposé entre le convertisseur électrique 42 et respectivement le premier sous-empilement 101 et le deuxième sous-empilement 102 de la pile à combustible 1 sont fermés de sorte que le premier sous-empilement 101 et le deuxième sous-empilement 102 de la pile à combustible 1 sont reliés au bus électrique 4.

Le premier sous-empilement 101 et le deuxième sous-empilement 102 produisent de l'énergie. L'étape de production d'énergie 708 dans le premier sous-empilement 101 et le deuxième sous-empilement 102 correspond à la phase III des figures 6-8.

On comprend que lorsque la demande est réduite, il est possible d'arrêter la production d'énergie dans le deuxième sous-empilement 102.

Lorsque la demande augmente à nouveau, il est possible de produire à nouveau plus d'énergie en produisant de l'énergie dans le premier sous-empilement 101 et dans le deuxième sous-empilement 102.

Bien entendu, le procédé de contrôle 700 n'est pas limité à une pile à combustible 1 avec une plaque intermédiaire 13. Le procédé de contrôle 700 peut être appliqué de manière similaire à une pile à combustible 1 comprenant plus d'une seule plaque intermédiaire 13. Aussi, en fonction du nombre de plaques intermédiaires 13, on peut préchauffer, lors de l'étape de préchauffage 702 des m sous-ensembles ou lors de l'étape de préchauffage 706 des p sous-empilements, plus d'un sous-ensemble à la fois.

On comprend qu'il est possible de préchauffer chaque sous-empilement ou non à la demande, suivant le besoin.

De même, on comprend que chaque sous-empilement peut produire de l'énergie ou non à la demande, suivant le besoin.

Quoique le présent exposé ait été décrit en se référant à un exemple de réalisation spécifique, il est évident que des différentes modifications et changements peuvent être effectués sur ces exemples sans sortir de la portée générale de l'invention telle que définie par les revendications. En outre, des caractéristiques individuelles des différents modes de réalisation évoqués peuvent être combinées dans des modes de réalisation additionnels. Par conséquent, la description et les dessins doivent être considérés dans un sens illustratif plutôt que restrictif. De même pour le moyen de chauffage 20 qui peut ne pas être un moyen de chauffage électrique.

## Revendications

1. Pile à combustible (1) comprenant :
- un empilement (10) d'assemblages membrane/électrode comportant un électrolyte conducteur d'ions (150) disposé entre une anode (152) et une cathode (154), deux assemblages adjacents étant séparés par une plaque bipolaire (156), l'empilement (10) comportant une première et une deuxième extrémité,
- une plaque terminale d'entrée (12) disposée à la première extrémité de l'empilement (10) et une plaque terminale de sortie (11) disposée à la deuxième extrémité de l'empilement (10),
- n plaques intermédiaires (13) disposées dans l'empilement (10) entre la plaque terminale d'entrée (12) et la plaque terminale de sortie (11) pour former n+1 sous-empilements (101, 102, 103) de l'empilement (10), n étant supérieur ou égal à 1,
- des conduits de circulation d'un fluide caloporteur (24A-24D, 113), d'un comburant (32A-32D) et d'un combustible (51A-51D) dans la pile à combustible (1), les conduits de circulation passant dans la plaque terminale d'entrée (12), la plaque terminale de sortie (11) et les n plaques intermédiaires (13),
- des vannes de contrôle du fluide caloporteur (111, 112) dans les conduits de circulation de la plaque terminale de sortie (11) et des vannes de contrôle du fluide caloporteur (131, 132), du comburant (135, 136) et du combustible (133, 134) dans les conduits de circulation des n plaques intermédiaires (13), les vannes de contrôle étant configurées pour permettre la circulation du fluide caloporteur, du comburant et du combustible dans m sous-empilements (101, 102, 103) de l'empilement (10), m étant supérieur ou égal à 1 et inférieur ou égal à n.

2. Pile à combustible (1) selon la revendication 1, dans laquelle les conduits de circulation du fluide caloporteur pour le préchauffage de la pile à combustible et pour le refroidissement de la pile à combustible sont confondus.

3. Pile à combustible (1) selon la revendication 1 ou 2, dans laquelle l'électrolyte conducteur d'ion (150) est une membrane échangeuse de proton.

4. Pile à combustible (1) selon la revendication 3, dans laquelle la membrane échangeuse de protons est une membrane échangeuse de protons haute température.

5. Pile à combustible (1) selon l'une quelconque des revendications 1 à 4, les vannes de contrôle d'au moins une des n plaques intermédiaires (13) sont externes à la plaque intermédiaire (13).

6. Système (600) comprenant une pile à combustible (1) selon l'une quelconque des revendications 1 à 5, un circuit de circulation du fluide caloporteur (24, 25), un circuit de circulation du combustible (30-33), un circuit de circulation du comburant (50-52) et un circuit électrique comprenant un dispositif de stockage d'énergie.

7. Système (600) selon la revendication 6, dans lequel le circuit de circulation du fluide caloporteur comprend un échangeur de chaleur (21) configuré pour refroidir le fluide caloporteur et un échangeur de chaleur (20) configuré pour réchauffer le fluide caloporteur.

8. Procédé de contrôle (700) d'un système (600) selon la revendication 6 ou 7, le procédé (700) comprenant les étapes suivantes :
- une étape de préchauffage (702) de m sous-empilements (101, 102, 103) de l'empilement (10) de la pile à combustible (1) ;
- lorsque les m sous-empilements (101, 102, 103) sont à température de travail, une étape de production d'énergie (704) dans les m sous-empilements (101, 102, 103).

9. Procédé de contrôle (700) selon la revendication 8, comprenant :
- une étape de préchauffage (706) de p sous-empilements (101, 102, 103) de l'empilement (10) de la pile à combustible (1) au moins partiellement au moyen de l'énergie et/ou de la chaleur produite par les m sous-empilements (101, 102, 103), les p sous-empilements étant distincts des m sous-empilements et p étant supérieur ou égal à 1 et m+p étant inférieur ou égal à n+1,
- lorsque les p sous-empilements sont à température de travail, une étape de production d'énergie (708) dans les m+p sous-empilements.

10. Procédé de contrôle (700) selon la revendication 8 ou 9, dans lequel l'énergie produite par les m sous-empilements (101, 102, 103) est stockée dans le dispositif de stockage d'énergie et/ou est utilisée pour alimenter des composants auxiliaires du système (600) et/ou est utilisée pour alimenter des composants extérieurs au système (600).

## Patentansprüche

1. Brennstoffzelle (1), umfassend:
- einen Stapel (10) von Membran/Elektroden-Anordnungen, die einen ionenleitenden Elektrolyten (150) umfassen, der zwischen einer Anode (152) und einer Kathode (154) angeordnet ist, wobei zwei benachbarte Anordnungen durch eine bipolare Platte (156) getrennt sind, wobei der Stapel (10) ein erstes und ein zweites Ende umfasst,
- eine Eingangsabschlussplatte (12), die an dem ersten Ende des Stapels (10) angeordnet ist, und eine Ausgangsabschlussplatte (11), die an dem zweiten Ende des Stapels (10) angeordnet ist,
- n Zwischenplatten (13), die in dem Stapel (10) zwischen der Eingangsabschlussplatte (12) und der Ausgangsabschlussplatte (11) angeordnet sind, um n+1 Teilstapel (101, 102, 103) des Stapels (10) zu bilden, wobei n größer als oder gleich wie 1 ist,
- Zirkulationsleitungen eines Wärmeträgerfluids (24A-24D, 113), eines Oxidationsmittel (32A-32D) und eines Brennstoffs (51A-51D) in der Brennstoffzelle (1), wobei die Zirkulationsleitungen durch die Eingangsabschlussplatte (12), die Ausgangsabschlussplatte (11) und die n Zwischenplatten (13) verlaufen,
- Steuerventile des Wärmeträgerfluids (111, 112) in den Zirkulationsleitungen der Ausgangsendplatte (11) und Steuerventile des Wärmeträgerfluids (131, 132), des Oxidationsmittel (135, 136) und des Brennstoffs (133, 134) in den Zirkulationsleitungen der n Zwischenplatten (13), wobei die Steuerventile konfiguriert sind, um die Zirkulation des Wärmeträgerfluids, des Oxidationsmittels und des Brennstoffs in m Teilstapeln (101, 102, 103) des Stapels (10) zu ermöglichen, wobei m größer als oder gleich wie 1 und kleiner als oder gleich wie n ist.

2. Brennstoffzelle (1) nach Anspruch 1, wobei die Zirkulationsleitungen des Wärmeträgermediums zum Vorwärmen der Brennstoffzelle und zum Kühlen der Brennstoffzelle ineinander übergehen.

3. Brennstoffzelle (1) nach Anspruch 1 oder 2, wobei der ionenleitenden Elektrolyt (150) eine Protonenaustauschermembran ist.

4. Brennstoffzelle (1) nach Anspruch 3, wobei die Protonenaustauschmembran eine Hochtemperatur-Protonenaustauschmembran ist.

5. Brennstoffzelle (1) nach einem der Ansprüche 1 bis 4, wobei die Steuerventile von mindestens einer der n Zwischenplatten (13) außerhalb der Zwischenplatte (13) sind.

6. System (600), umfassend eine Brennstoffzelle (1) nach einem der Ansprüche 1 bis 5, einen Kreislauf des Wärmeträgerfluids (24, 25), einem Kreislauf des Brennstoffs (30-33), einen Kreislauf des Oxidationsmittels (50-52) und einen elektrischen Kreislauf, umfassend eine Energiespeichervorrichtung.

7. System (600) nach Anspruch 6, wobei der Kreislauf des Wärmeträgerfluids einen Wärmetauscher (21), der zum Kühlen des Wärmeträgerfluids konfiguriert ist, und einen Wärmetauscher (20), der zum Erwärmen des Wärmeträgerfluids konfiguriert ist, umfasst.

8. Verfahren (700) zum Steuern eines Systems (600) nach Anspruch 6 oder 7, das Verfahren (700) umfassend die folgenden Schritte:
- einen Schritt eines Vorwärmens (702) von m Teilstapeln (101, 102, 103) des Stapels (10) der Brennstoffzelle (1);
- wenn die m Teilstapel (101, 102, 103) auf Arbeitstemperatur sind, einen Schritt eines Erzeugens von Energie (704) in den m Teilstapeln (101, 102, 103).

9. Steuerungsverfahren (700) nach Anspruch 8, umfassend:
- einen Schritt eines Vorwärmens (706) von p Teilstapeln (101, 102, 103) des Stapels (10) der Brennstoffzelle (1) zumindest teilweise mittels der Energie und/oder Wärme, die von den m Teilstapeln (101, 102, 103) erzeugt wird, wobei die p Teilstapel von den m Teilstapeln verschieden sind und p größer als oder gleich wie 1 ist und m+p kleiner als oder gleich wie n+1 ist,
- wenn die p Teilstapel auf Arbeitstemperatur sind, einen Schritt zum Erzeugen von Energie (708) in den m+p Teilstapeln.

10. Steuerungsverfahren (700) nach Anspruch 8 oder 9, wobei die von den m Teilstapeln (101, 102, 103) erzeugte Energie in der Energiespeichervorrichtung gespeichert wird und/oder zur Versorgung von Hilfskomponenten des Systems (600) verwendet wird und/oder zur Versorgung von Komponenten außerhalb des Systems (600) verwendet wird.

## Claims

1. A fuel cell (1) comprising:
- a stack (10) of membrane/electrodes assemblies including an ion-conductive electrolyte (150) disposed between an anode (152) and a cathode (154), two adjacent assemblies being separated by a bipolar plate (156), the stack (10) including a first and a second end,
- an inlet end plate (12) disposed at the first end of the stack (10) and an outlet end plate (11) disposed at the second end of the stack (10),
- n intermediate plates (13) disposed in the stack (10) between the inlet end plate (12) and the outlet end plate (11) to form n+1 sub-stacks (101, 102, 103) of the stack (10), n being greater than or equal to 1,
- ducts for circulating a heat transfer fluid (24A-24D, 113), an oxidant (32A-32D) and a fuel (51A-51D) in the fuel cell (1), the circulation ducts passing in the inlet end plate (12), the outlet end plate (11) and the n intermediate plates (13),
- valves for controlling the heat transfer fluid (111, 112) in the circulation ducts of the outlet end plate (11) and valves for controlling the heat transfer fluid (131, 132), the oxidant (135, 136) and the fuel (133, 134) in the circulation ducts of the n intermediate plates (13), the control valves being configured to allow the circulation of the heat transfer fluid, the oxidant and the fuel in m sub-stacks (101, 102, 103) of the stack (10), m being greater than or equal to 1 and less than or equal to n.

2. The fuel cell (1) according to claim 1, wherein the ducts for circulating the heat transfer fluid for the preheating of the fuel cell and for the cooling of the fuel cell are combined.

3. The fuel cell (1) according to claim 1 or 2, wherein the ion-conductive electrolyte (150) is a proton exchange membrane.

4. The fuel cell (1) according to claim 3, wherein the proton exchange membrane is a proton exchange membrane high temperature.

5. The fuel cell (1) according to any one of claims 1 to 4, wherein the valves for controlling at least one of the n intermediate plates (13) are external to the intermediate plate (13).

6. A system (600) comprising a fuel cell (1) according to any one of claims 1 to 5, a circuit for circulating the heat transfer fluid (24, 25), a circuit for circulating the fuel (30-33), a circuit for circulating the oxidant (50-52) and an electric circuit comprising a device for storing energy.

7. The system (600) according to claim 6, wherein the heat transfer fluid circulation circuit comprises a heat exchanger (21) configured to cool the heat transfer fluid and a heat exchanger (20) configured to heat the heat transfer fluid.

8. A method (700) for controlling a system (600) according to claim 6 or 7, the method (700) comprising the following steps:
- a step (702) of preheating m sub-stacks (101, 102, 103) of the stack (10) of the fuel cell (1);
- when the m sub-stacks (101, 102, 103) are at working temperature, a step (704) of producing energy in the m sub-stacks (101, 102, 103).

9. The control method (700) according to claim 8, comprising:
- a step (706) of preheating p sub-stacks (101, 102, 103) of the stack (10) of the fuel cell (1) at least partially by means of the energy and/or the heat produced by the m sub-stacks (101, 102, 103), the p sub-stacks being separate from the m sub-stacks and p being greater than or equal to 1 and m+p being less than or equal to n+1,
- when the p sub-stacks are at working temperature, a step (708) of producing energy in the m+p sub-stacks.

10. The control method (700) according to claim 8 or 9, wherein the energy produced by the m sub-stacks (101, 102, 103) is stored in the energy storage device and/or is used to power auxiliary components of the system (600) and/or is used to power components external to the system (600).
